# EUROPÄISCHE PATENTANMELDUNG

(11) **EP 4 509 803 A1**
(43) Veröffentlichungstag der Anmeldung: **19.02.2025**
(21) Anmeldenummer: 23192238.6
(22) Anmeldetag: 18.08.2023
(51) Int. Cl.: G01F 11/24, G01F 13/00, H01M 4/04

(54) **DOSIERVORRICHTUNG UND ANLAGE ZUM VERARBEITEN EINES SCHÜTTGUTS**

(71) Anmelder: K-TRON Technologies, Inc., Sewell, NJ 08080 (US)
(72) Erfinder: Helfenstein, Urs, 5707 Seengen (CH)
(74) Vertreter: Ege Lee & Roider Patentanwälte

(57) **Zusammenfassung**

Dosiervorrichtung (100) zum dosierten Abgeben eines Schüttguts (102), insbesondere eines trockenen Elektrodenmaterials (102), mit einer Dosierwalze (104) und einer Gegenwalze (106), die zueinander derart angeordnet sind, dass ein Spaltbereich (108) zwischen der Dosierwalze (104) und der Gegenwalze (106) ausgebildet ist, wobei die Dosierwalze (104) drehbar gelagert und in wenigstens einer Drehrichtung antreibbar ist, sowie Anlage (200) zum Verarbeiten eines Schüttguts (102), insbesondere eines trockenen Elektrodenmaterials (102), mit einer solchen Dosiervorrichtung (100) und einer der Dosiervorrichtung (100) nachgeschaltenen Kalander- und/oder Beschichtungsvorrichtung (202), wobei die Dosiervorrichtung (100) ausgebildet ist, Schüttgut (102) der Kalander- und/oder Beschichtungsvorrichtung (202) dosiert und, insbesondere in axialer Richtung, gleichmäßig verteilt zuzuführen.

## Beschreibung

Die Erfindung betrifft eine Dosiervorrichtung für Schüttgut. Außerdem betrifft die Erfindung eine Anlage zum Verarbeiten eines Schüttguts.

Zum dosierten Abgeben eines Schüttguts, wie z.B. eines Pulvers, sind Dosiervorrichtungen bekannt, die einen Schüttgutbehälter und eine Ausgabevorrichtung mit dem dazugehörigen Antrieb aufweisen. Beispielsweise können solche Dosiervorrichtungen als Schneckenförderer ausgebildet sein, die eine Förderschnecke aufweisen. Durch die Schneckenwindungen der Förderschnecke resultiert eine portionsweise Abgabe, sodass die Dosiergenauigkeit zwar über große Zeiträume immer noch vorhanden ist, aber über kleine Zeiträume relativ ungenau ist. Schneckenförderer können daher bei Feindosierungen nicht zum Einsatz gelangen. Ferner wird durch die Förderschnecke das zu dosierende Material mechanisch beansprucht, z.B. durch Scherung, Komprimierung und/oder Reibung. Dadurch kann das zu dosierende Material zerstört werden oder verklumpen. Eine gleichmäßig verteilte Bereitstellung des zu dosierenden Materials ist somit nicht mehr möglich. Auch können sich dadurch die Materialeigenschaften ungewollt ändern. Das ist insbesondere nachteilig, beim Dosieren von empfindlichem Schüttgut, dass einer nachfolgenden Verarbeitungseinrichtung gleichmäßig verteilt zudosiert werden muss.

Beispielsweise wird bei der Herstellung einer Batteriezelle ein Trägermaterial, zum Beispiel eine Trägerfolie, mit einem trockenen Pulver beschichtet (sog. "dry coating battery production"). Das Pulver weist mehrere Komponenten auf, u.a. ein Aktivmaterial, das entweder für die Anode oder für die Kathode einer Batteriezelle spezifisch ist. Beispielsweise kann das Aktivmaterial Graphit (z.B. für die Anode) oder ein Lithium-Nickel-Mangan-Kobalt-Oxid oder Lithium-Eisenphosphat (z.B. für die Kathode) sein. Die Herausforderung dabei ist, dass das Material, z.B. Nickel-Mangan-Cobalt (NMC) oder Lithium-Eisenphosphat (LFP), nicht nur exakt zugeführt, sondern auch möglichst exakt über die gesamte Produktionsbreite verteilt werden muss. Das Material wird jedoch so aufbereitet, dass es eine gleichmäßige und elastische Schicht in den Kalanderwalzen bilden kann und enthält daher Bindemittel, z.B. Polytetrafluorethylen (PTFE), Polyvinylidenfluorid (PVDF) oder andere Binder, das so gemischt wird, dass es Fibrillen / Fasern bildet. Wird Druck ausgeübt, beispielsweise durch eine Förderschnecke einer Dosiervorrichtung, beginnt das Material zu verklumpen. Eine gleichmäßig verteilte und dosierte Zuführung eines solchen Pulvers bzw. trockenen Elektrodenmaterials auf eine Oberfläche eines plattenförmigen oder folienförmigen Trägermaterials bzw. zu einer Kalander- und/oder Beschichtungsvorrichtung zur Herstellung von Elektroden wäre daher wünschenswert. Weiter kann eine kurzzeitige Dosiergenauigkeit wichtig sein, um möglichst wenig Materialvorlage im Spalt zu haben.

Der Erfindung liegt die Aufgabe zugrunde, eine eingangs genannte Dosiervorrichtung strukturell und/oder funktionell zu verbessern. Außerdem liegt der Erfindung die Aufgabe zugrunde, eine eingangs genannte Anlage zum Verarbeiten eines Schüttguts, insbesondere eines trockenen Elektrodenmaterials, strukturell und/oder funktionell zu verbessern.

Beispielsweise ist es eine Aufgabe der vorliegenden Erfindung, eine Dosiervorrichtung für Schüttgut, insbesondere für Elektrodenmaterial, bereitzustellen, welche die im Zusammenhang mit dem Stand der Technik aufgezeigten Probleme reduzieren bzw. beseitigen kann. Insbesondere ist es eine Aufgabe der vorliegenden Erfindung, eine gleichmäßig verteilte und dosierte Zuführung des Materials zu ermöglichen, um eine dünne Materialschicht ausbilden zu können. Dabei soll auch ein Verklumpen des Materials verhindert werden.

Die Aufgabe wird gelöst mit einer Dosiervorrichtung mit den Merkmalen des Anspruchs 1. Außerdem wird die Aufgabe gelöst mit einer Anlage mit den Merkmalen des Anspruchs 16. Vorteilhafte Ausführungen und/oder Weiterbildungen sind Gegenstand der Unteransprüche, der Beschreibung und/oder den begleitenden Figuren. Insbesondere können die unabhängigen Ansprüche einer Anspruchskategorie auch analog zu den abhängigen Ansprüchen einer anderen Anspruchskategorie weitergebildet und/oder kombiniert sein. Ebenso können nachfolgend beschriebene Vorrichtungs- und Verfahrensmerkmale miteinander kombiniert und/oder weitergebildet werden.

Ein Aspekt betrifft eine Dosiervorrichtung zum dosierten Abgeben eines Schüttguts. Die Dosiervorrichtung kann insbesondere zum dosierten und gleichmäßig verteilten Abgeben des Schüttguts ausgebildet sein. Das Schüttgut kann insbesondere ein trockenes Material, z.B. trockenes Elektrodenmaterial, sein. Das Elektrodenmaterial kann für eine Elektrode einer Batteriezelle sein. Beispielsweise kann das Schüttgut z.B. Nickel-Mangan-Cobalt (NMC) oder Lithium-Eisenphosphat (LFP) umfassen. Zusätzlich kann das Schüttgut ein Bindemittel, z.B. Polytetrafluorethylen (PTFE), Polyvinylidenfluorid (PVDF) oder andere Binder, aufweisen. Das Schüttgut kann je nach Partikelgröße und/oder Partikelform beispielsweise als Pulver, Granulat, Flocken oder Fasern vorliegen.

Die Dosiervorrichtung umfasst einer Dosierwalze und eine Gegenwalze. Die Dosierwalze und die Gegenwalze sind zueinander derart angeordnet, dass ein Spaltbereich zwischen der Dosierwalze und der Gegenwalze ausgebildet ist. Ferner ist die Dosierwalze drehbar gelagert und in wenigstens einer Drehrichtung antreibbar. Hierzu kann ein Antrieb, wie ein Motor oder Elektromotor, vorgesehen sein, der die Dosierwalze antreibt.

In einer bevorzugten Variante kann die Gegenwalze drehbar gelagert sein. Dabei kann die Gegenwalze in wenigstens einer Drehrichtung antreibbar sein. Hierzu kann ein Antrieb, wie ein Motor oder Elektromotor, vorgesehen sein, der die Gegenwalze antreibt. In einer Variante kann die Dosierwalze und die Gegenwalze gleichsinnig drehantreibar oder drehangetrieben sein, beispielsweise so, dass im Spaltbereich zwischen der Dosierwalze und der Gegenwalze eine gegenläufige Bewegung resultiert. Dadurch kann überschüssiges Material einfach abgesteift werden. Die Dosierwalze und die Gegenwalze können daher in die gleiche Drehrichtung antriebbar ausgebildet sein. D.h., die Dosierwalze und die Gegenwalze können sich beide gleichzeitig im Uhrzeigersinn oder beide gleichzeitig gegen den Uhrzeigersinn drehen. Die Antriebe können so ausgebildet und/oder gesteuert sein, dass sich die Dosierwalze und die Gegenwalze mit gleicher oder unterschiedlicher Geschwindigkeit, wie Rotationsgeschwindigkeit, drehen. Alternativ kann die Gegenwalze feststehend ausgebildet sein. Die Dosierwalze und die Gegenwalze können parallel zueinander angeordnet sein. Dabei können die Achse, z.B. Drehachsen, der Dosierwalze und der Gegenwalze parallel zueinander sein. Die Dosiervorrichtung kann ferner eine Steuerung aufweisen. Die Steuerung kann dazu eingereicht sein, eine Drehrichtung und/oder eine Geschwindigkeit, wie Rotationsgeschwindigkeit oder Umfangsgeschwindigkeit, der Dosierwalze und/oder der Gegenwalze zu steuern. Beispielsweise kann die Steuerung dazu eingereicht sein, eine Geschwindigkeit, wie Rotationsgeschwindigkeit oder Umfangsgeschwindigkeit, der Dosierwalze so zu steuern, dass sie größer oder kleiner ist als eine Geschwindigkeit, wie Rotationsgeschwindigkeit oder Umfangsgeschwindigkeit, der Gegenwalze. Insbesondere kann die Steuerung so eingerichtet sein, dass sie die Dosierwalze und die Gegenwalze so steuert, z.B. mittels der Antriebe, dass sich die Dosierwalze und die Gegenwalze gleichsinnig, also in gleicher Drehrichtung, drehen. In einer Variante kann die Steuerung so eingerichtet sein, dass sie die Dosierwalze und die Gegenwalze so steuert, dass das Verhältnis der beiden Geschwindigkeiten, insbesondere der beiden Umfangsgeschwindigkeiten, im Wesentlichen konstant gehalten wird. Unter dem Verhältnis kann insbesondere das Verhältnis der Dosierwalzen-Geschwindigkeit und der Gegenwalzen-Geschwindigkeit zueinander verstanden werden.

Die Dosiervorrichtung kann einen Schüttgutbehälter aufweisen. Der Schüttgutbehälter kann ein Trichter, wie Einfülltrichter, sein. Der Schüttgutbehälter kann eine Einlassöffnung aufweisen, die an seinem oberen Ende vorgesehen ist. Über die Einlassöffnung kann dem Schüttgutbehälter das Schüttgut zugeführt werden. Ferner kann der Schüttgutbehälter eine Auslassöffnung aufweisen. Die Auslassöffnung ist an dem unteren Ende des Schüttgutbehälters vorgesehen. Die Dosierwalze kann zum Aufnehmen von Schüttgut zumindest abschnittsweise in die Auslassöffnung hineinragen. In axialer Richtung kann die Länge der Auslassöffnung des Schüttgutbehälters im Wesentlichen der Länge des Spaltbereichs und/oder im Wesentlichen der Länge der Dosierwalze entsprechen. Ferner kann sich der Schüttgutbehälter zum unteren Ende hin aufweiten, beispielsweise konisch nach unten aufweiten.

Soweit nicht anders angegeben oder es sich aus dem Zusammenhang nicht anders ergibt, beziehen sich die Angaben "axial", "radial" und "in Umfangsrichtung" auf eine Erstreckungsrichtung der Drehachse der Dosierwalze. "Axial" entspricht dann einer Erstreckungsrichtung der Drehachse der Dosierwalze. "Radial" ist dann eine zur Erstreckungsrichtung der Drehachse der Dosierwalze senkrechte und sich mit der Drehachse der Dosierwalze schneidende Richtung. "In Umfangsrichtung" entspricht dann einer Kreisbogenrichtung um die Drehachse der Dosierwalze.

Zum Aufnehmen des Schüttguts kann die Dosierwalze zumindest eine Längsnut aufweisen. Die zumindest eine Längsnut kann auch als Zelle, z.B. als Materialaufnahmezelle, bezeichnet werden. Die Dosierwalze kann ausgebildet sein, das Schüttgut zu der Gegenwalze und/oder in den Spalt zwischen Dosierwalze und Gegenwalze zu transportieren. Dabei kann mittels der zumindest einen Längsnut das Schüttgut aus dem Schüttgutbehälter aufgenommen und zu dem bzw. in den Spalt zwischen Dosierwalze und Gegenwalze transportiert werden. Die Dosiervorrichtung kann ferner eine Ausgabeöffnung aufweisen, durch die das Schüttgut ausgegeben werden kann. Nachdem die Dosierwalze das Schüttgut durch den Spalt zwischen Dosierwalze und Gegenwalze transportiert hat, kann das Schüttgut durch die Ausgabeöffnung fallen und so dosiert und gleichmäßig verteilt einer nachgeschaltenen Vorrichtung bereitgestellt werden. In einer Variante kann die Dosierwalze eine Vielzahl von Längsnuten zum Aufnehmen des Schüttguts aufweisen. Jeweils zwischen zwei Längsnuten kann ein Längssteg ausgebildet sein. Die Dosierwalze kann daher eine Vielzahl von Längsstegen aufweisen. Die Längsstege und/oder Längsnuten können sich in Längsrichtung der Dosierwalze erstecken. Die Längsrichtung kann die Richtung der Drehachse der Dosierwalze sein. Die Längsstege und/oder Längsnuten können an der Umfangsfläche vorgesehen sein. Insbesondere können die Längsstege in radial Richtung von der Dosierwalze abstehen. In Umfangsrichtung kann die Breite der Längsnuten größer sein als die Breite der Längsstege. Beispielsweise kann in Umfangsrichtung die Breite der Längsnuten im Wesentlichen zweimal, dreimal, viermal, fünfmal oder mehr der Breite der Längsstege entsprechen. Die Längsnuten können durch die Umfangsfläche der Dosierwalze und die Längsstege ausgebildet und/oder begrenzt sein. In einer Variante können die Längsstege in axialer Richtung bzw. Längsrichtung durchgehend oder mehrmals unterbrochen ausgebildet sein. Die Längsstege können jeweils mehrere in axialer Richtung bzw. Längsrichtung voneinander beabstandete Stegabschnitte aufweisen. Die Stegabschnitte zweier in Umfangsrichtung benachbarter Längsstege können in Umfangsrichtung versetzt zueinander oder fluchtend hintereinander angeordnet sein. Ferner können die Stegabschnitte in axialer Richtung bzw. Längsrichtung senkrechte oder keilförmige Flanken aufweisen.

In einer Variante kann die Gegenwalze ausgebildet sein, durch die Dosierwalze überschüssig aufgenommenes Schüttgut im Spaltbereich abzustreifen, beispielsweise so, dass es dem Schüttgutbehälter wieder zugeführt wird. Ferner kann die Dosiervorrichtung zumindest eine Abstreifeinrichtung aufweisen. Die Abstreifeinrichtung kann dazu ausgebildet sein, an der Dosierwalze oder an der Gegenwalze haftendes Schüttgut abzustreifen. Die zumindest eine Abstreifeinrichtung kann Bürstenelement aufweisen. Das Bürstenelement kann derart angeordnet sein, dass eine Kante oder Stirnseite des Bürstenelements an der Dosierwalze oder der Gegenwalze anliegt. Beispielsweise kann eine erste Abstreifeinrichtung für die Dosierwalze und eine zweite Abstreifeinrichtung für die Gegenwalze vorgesehen sein.

Die Dosiervorrichtung kann eine volumetrisch und/oder gravimetrisch betreibbare Dosiervorrichtung sein. Die Dosiervorrichtung kann zum Erfassen des Materialgewichts ausgebildet sein. Die Dosiervorrichtung kann zum Regeln der Gewichtsabnahme und/oder Gewichtszunahme des Materials eingerichtet sein. Dazu kann die Dosiervorrichtung eine Waage aufweisen. Die Dosiervorrichtung kann dazu ausgebildet sein, den Stoffstrom, das Volumen und/oder das Gewicht des zu dosierenden Materials, insbesondere exakt, zu erfassen. Ferner kann eine Sensoreinrichtung vorgesehen sein, die ausgebildet ist, die Schüttguthöhe über der Dosierwalze und/oder den Füllstand des Schüttgutbehälters zu erfassen. Die Sensoreinrichtung kann eine Waage, einen Ultraschallsensor, eine Kamera und/oder einen Lasersensor aufweisen, beispielsweise eine Waage zum Überwachen des Füllstands, einen Laser-Abstandssensor, wie einen Time-of-Flight-Laser-Sensor, oder einen auf Laser-Triangulation basierenden Sensor.

Ein weiterer Aspekt betrifft eine Anlage zum Verarbeiten eines Schüttguts, beispielsweise eines wie vorstehend und/oder nachfolgend beschriebenen Schüttguts, insbesondere eines trockenen Elektrodenmaterials. Die Anlage kann eine Kalander- und/oder Beschichtungsanlage. Beispielsweise kann die Anlage eine Elektrodenherstellungsanlage, eine Batteriezellenherstellungsanlage oder ein Teil davon sein.

Die Anlage weist zumindest eine Dosiervorrichtung zum dosierten und gleichmäßig verteilten Abgeben eines Schüttguts auf. Die zumindest eine Dosiervorrichtung ist wie vorstehend und/oder nachfolgend beschrieben ausgebildet. Ferner weist die Anlage eine Kalander- und/oder Beschichtungsvorrichtung auf. Die Anlage kann zu Herstellung trockener Elektroden für Batteriezellen dienen und/oder ausgebildet sein. Die Elektroden können in Batteriezellen implementiert sein oder werden.

Die zumindest eine Dosiervorrichtung ist der Kalander- und/oder Beschichtungsvorrichtung vorgeschalten bzw. die Kalander- und/oder Beschichtungsvorrichtung ist der zumindest einen Dosiervorrichtung nachgeschalten. Dabei ist die Dosiervorrichtung ausgebildet, Schüttgut der Kalander- und/oder Beschichtungsvorrichtung dosiert und, insbesondere in axialer Richtung / Längsrichtung der Dosierwalze, gleichmäßig verteilt zuzuführen.

Die Anlage bzw. dessen Kalander- und/oder Beschichtungsvorrichtung kann mehrere Kalanderwalzen aufweisen, beispielsweise eine erste Kalanderwalze und eine zweite Kalanderwalze. Ferner kann die Anlage eine Steuerung aufweisen. Die zweite Kalanderwalze kann so ausgebildet und/oder angeordnet sein, dass sie einen ersten Spalt zwischen der ersten Kalanderwalze und der zweiten Kalanderwalze bildet. Der erste Walzenspalt kann so ausgebildet sein, dass er das Schüttgut, z.B. das trockene Elektrodenmaterial, von der zumindest einen Dosiervorrichtung empfängt / aufnimmt und aus dem Schüttgut, z.B. aus dem trockenen Elektrodenmaterial, einen Materialfilm, z.B. einen trockenen Elektrodenfilm, bildet. Die Steuerung kann dazu eingereicht sein, eine Geschwindigkeit, wie Rotationsgeschwindigkeit, der ersten und zweiten Kalanderwalze zu steuern. Hierzu können Antriebe, z.B. Motoren oder Elektromotoren, zum Drehantreiben der Kalanderwalzen vorgesehen sein. Beispielsweise kann die Steuerung dazu eingereicht sein, eine Geschwindigkeit, wie Rotationsgeschwindigkeit, der zweiten Kalanderwalze so zu steuern, dass sie größer oder kleiner ist als eine Geschwindigkeit, wie Rotationsgeschwindigkeit, der ersten Kalanderwalze.

Mit der Erfindung kann eine konstante Dosierung über die Zeit und die Breite ermöglicht werden. Es kann so eine gleichmäßig verteilte und dosierte Zuführung des Materials ermöglich werden, um eine dünne Materialschicht ausbilden zu können. Ein Verklumpen des Materials kann ebenso verhindert oder zumindest signifikant minimiert werden.

Nachfolgend werden Ausführungsbeispiele der Erfindung unter Bezugnahme auf Figuren näher beschrieben, dabei zeigen schematisch und beispielhaft:
- Fig. 1: eine Schnittansicht einer Dosiervorrichtung;
- Fig. 2: eine perspektivische Ansicht der Dosiervorrichtung gemäß Fig. 1;
- Fig. 3: eine perspektivische Schnittansicht der Dosiervorrichtung gemäß Fig. 1; und
- Fig. 4: eine Anlage zum Verarbeiten eines Schüttguts mit einer Dosiervorrichtung gemäß Fig. 1.

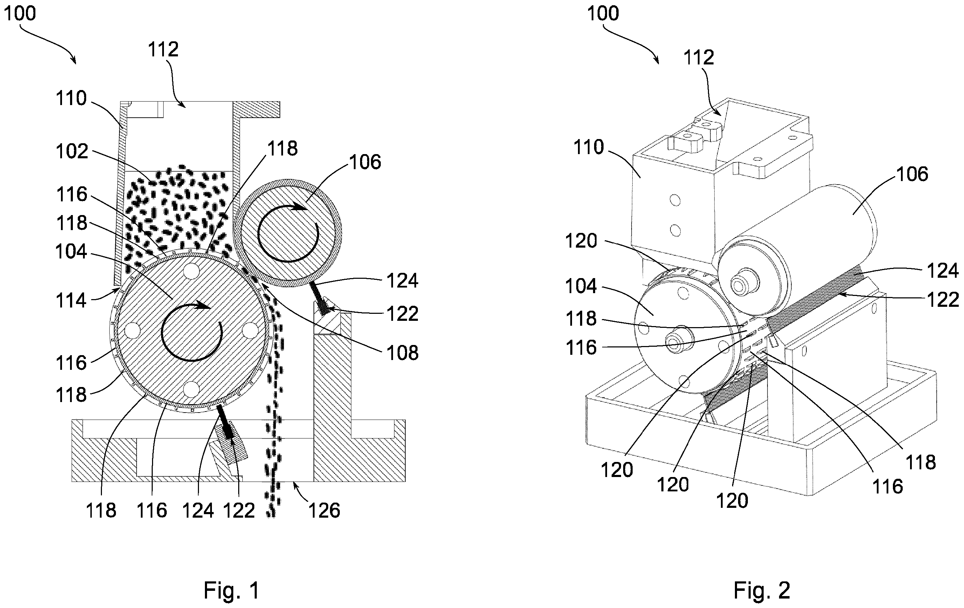

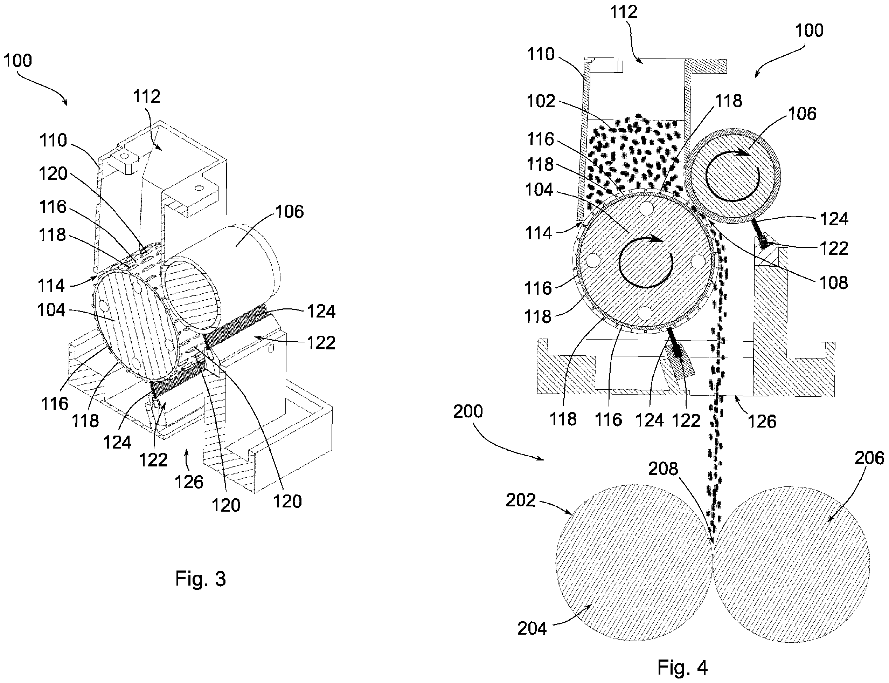

Fign. 1 bis 3 zeigen eine Dosiervorrichtung 100 zum dosierten Abgeben eines Schüttguts in einer Schnittansicht (Fig. 1), in einer perspektivischen Ansicht (Fig. 2) und in einer perspektivischen Schnittansicht (Fig. 3). Im vorliegenden Ausführungsbeispiel ist das Schüttgut ein trockenes Elektrodenmaterial 102, das durch die Dosiervorrichtung 100 gleichmäßig verteilt und dosiert abgegeben bzw. bereitgestellt werden kann. Das Elektrodenmaterial kann pulverförmig sein.

Die Dosiervorrichtung 100 weist eine Dosierwalze 104 und eine Gegenwalze 106 auf, die zueinander derart angeordnet sind, dass ein Spaltbereich 108 zwischen der Dosierwalze 104 und der Gegenwalze 106 ausgebildet ist. Die Dosierwalze 104 und die Gegenwalze 106 sind drehbar gelagert und in einer Drehrichtung mittels Antriebe, wie Motoren, antreibbar. Hierzu kann eine Steuerung vorgesehen sein. In der vorliegenden Variante, sind die Dosierwalze 104 und die Gegenwalze 106 gleichsinnig drehantreibar (in Fig. 1 durch die Pfeile veranschaulicht), und zwar so, dass im Spaltbereich 108 zwischen der Dosierwalze 104 und der Gegenwalze 106 eine gegenläufige Bewegung resultiert. D.h., die Dosierwalze 104 und die Gegenwalze 106 drehen sich in die gleiche Drehrichtung, in Fig. 1 im Uhrzeigersinn. Dabei ist die Gegenwalze 106 ferner ausgebildet, durch die Dosierwalze 104 überschüssig aufgenommenes Schüttgut im Spaltbereich 108 abzustreifen, insbesondere so, dass es dem Schüttgutbehälter 110 wieder zugeführt wird.

Ferner weist die Dosiervorrichtung 100 einen als Trichter ausgebildeten Schüttgutbehälter 110 auf, an dessen oberen Ende einen Einlassöffnung, über die das Schüttgut dem Schüttgutbehälter 110 zugeführt werden kann, und an dessen unteren Ende eine Auslassöffnung 114 vorgesehen ist, in die die Dosierwalze 104 zum Aufnehmen von Schüttgut zumindest abschnittsweise hineinragt. Wie in Fign. 2 und 3 dargestellt, entspricht in axialer Richtung die Länge der Auslassöffnung 114 des Schüttgutbehälters 110 im Wesentlichen der Länge des Spaltbereichs 108 und im Wesentlichen der Länge der Dosierwalze 104. Ferner weitet sich der Schüttgutbehälter zum unteren Ende hin auf. Dadurch kann die Auslassöffnung 114 größer sein als die Einlassöffnung 112.

Wie in Fign. 1 bis 3 dargestellt, weist die Dosierwalze 104 eine Vielzahl von Längsnuten 116 zum Aufnehmen des Schüttguts auf, wobei jeweils zwischen zwei Längsnuten 116 ein Längssteg 118 ausgebildet ist. In Umfangsrichtung ist die Breite der Längsnuten 116 größer als die Breite der Längsstege 118, so dass eine ausreichend große Zelle zum Aufnehmen des Schüttguts aus dem Schüttgutbehälter 110 ausgebildet ist.

Im vorliegenden Ausführungsbeispiel gemäß Fign. 1 bis 3 sind die Längsstege 118 in axialer Richtung mehrmals unterbrochen ausgebildet und weisen jeweils mehrere in axialer Richtung voneinander beabstandete Stegabschnitte 120 auf. Die Stegabschnitte 120 weisen in axialer Richtung keilförmige Flanken auf. Ferner sind die Stegabschnitte 120 zweier in Umfangsrichtung benachbarter Längsstege1 18 in Umfangsrichtung versetzt zueinander angeordnet sind.

Die Dosiervorrichtung 100 umfasst ferner zwei Abstreifeinrichtung 122, wobei eine Abstreifeinrichtung 122 ausgebildet ist, an der Dosierwalze 104 haftendes Schüttgut abzustreifen und die andere Abstreifeinrichtung 122 ausgebildet ist, an der Gegenwalze 106 haftendes Schüttgut abzustreifen. Hierfür weisen die Abstreifeinrichtung 122 jeweils ein Bürstenelement 124, dass an der Dosierwalze 104 bzw. an der Gegenwalze 106 anliegt.

Fig. 4 zeigt eine Anlage 200 zum Verarbeiten eines Schüttguts, insbesondere des vorstehend genannten trockenes Elektrodenmaterial 102. Beispielsweise kann die Anlage 200 eine Elektrodenherstellungsanlage, eine Batteriezellenherstellungsanlage oder ein Teil davon sein. Die Anlage kann zur Herstellung trockener Elektroden für Batteriezellen dienen und/oder ausgebildet sein.

Die Anlage 200 weist die vorstehend zu Fign. 1 bis 3 beschriebene Dosiervorrichtung 100 zum dosierten und gleichmäßig verteilten Abgeben des trockenen Elektrodenmaterials 102 auf. Ferner weist die Anlage 200 eine Kalandervorrichtung 202 auf. Die Kalandervorrichtung 202 ist der Dosiervorrichtung 100 nachgeschalten. Die Dosierwalze 104 der Dosiervorrichtung 100 ist ausgebildet, das trockene Elektrodenmaterial 102 zu der Gegenwalze 106 und in den Spalt 108 zwischen Dosierwalze 104 und Gegenwalze 106 zu transportieren. Dabei kann mittels Längsnuten 116 das trockene Elektrodenmaterial 102 aus dem Schüttgutbehälter 110 aufgenommen und zu dem bzw. in den Spalt 108 zwischen Dosierwalze 104 und Gegenwalze 106 transportiert werden. Nachdem die Dosierwalze 104 das trockene Elektrodenmaterial 102 durch den Spalt 108 zwischen Dosierwalze 104 und Gegenwalze 106 transportiert hat, fällt das trockene Elektrodenmaterial 102 durch eine Ausgabeöffnung 126 der Dosiervorrichtung 100 und wird so, insbesondere in axialer Richtung / Längsrichtung der Dosierwalze 104, gleichmäßig verteilt der nachgeschaltenen Kalandervorrichtung 202 dosiert bereitgestellt bzw. zugeführt.

Die Kalandervorrichtung 202 kann mehrere Kalanderwalzen aufweisen, beispielsweise eine erste Kalanderwalze 204 und eine zweite Kalanderwalze 206. Die zweite Kalanderwalze 206 ist so ausgebildet und angeordnet, dass sie einen ersten Spalt 208 zwischen der ersten Kalanderwalze 204 und der zweiten Kalanderwalze 206 bildet. Der erste Walzenspalt 208 ist so ausgebildet, dass er das trockene Elektrodenmaterial 102 von der Dosiervorrichtung 100 empfängt / aufnimmt und aus dem trockenen Elektrodenmaterial 102 einen trockenen Elektrodenfilm bildet. Eine Steuerung kann dazu eingereicht sein, eine Geschwindigkeit, wie Rotationsgeschwindigkeit, der ersten und zweiten Kalanderwalze zu steuern. Hierzu können Antriebe, z.B. Motoren oder Elektromotoren, zum Drehantreiben der Kalanderwalzen vorgesehen sein. Beispielsweise kann die Steuerung dazu eingereicht sein, eine Geschwindigkeit, wie Rotationsgeschwindigkeit, der zweiten Kalanderwalze so zu steuern, dass sie größer oder kleiner ist als eine Geschwindigkeit, wie Rotationsgeschwindigkeit, der ersten Kalanderwalze.

Im Übrigen wird ergänzend insbesondere auf Fign. 1 bis 3 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

Bezugszeichen
- 100: Dosiervorrichtung
- 102: Elektrodenmaterial
- 104: Dosierwalze
- 106: Gegenwalze
- 108: Spaltbereich
- 110: Schüttgutbehälter
- 112: Einlassöffnung
- 114: Auslassöffnung
- 116: Längsnuten
- 118: Längsstege
- 120: Stegabschnitte
- 122: Abstreifeinrichtungen
- 124: Bürstenelement
- 126: Ausgabeöffnung

- 200: Anlage
- 202: Kalandervorrichtung
- 204: erste Kalanderwalze
- 206: zweite Kalanderwalze
- 208: Spalt

## Patentansprüche

1. Dosiervorrichtung (100) zum dosierten Abgeben eines Schüttguts (102), insbesondere eines trockenen Elektrodenmaterials (102), mit einer Dosierwalze (104) und einer Gegenwalze (106), die zueinander derart angeordnet sind, dass ein Spaltbereich (108) zwischen der Dosierwalze (104) und der Gegenwalze (106) ausgebildet ist, wobei die Dosierwalze (104) drehbar gelagert und in wenigstens einer Drehrichtung antreibbar ist.

2. Dosiervorrichtung (100) nach Anspruch 1, **dadurch gekennzeichnet, dass** die Gegenwalze (106) drehbar gelagert und in wenigstens einer Drehrichtung antreibbar ist.

3. Dosiervorrichtung (100) nach wenigstens einem der vorhergehenden Ansprüche, **dadurch gekennzeichnet, dass** die Dosierwalze (104) und die Gegenwalze (106) gleichsinnig drehantreibar oder drehangetrieben sind, insbesondere so, dass im Spaltbereich (108) zwischen der Dosierwalze (104) und der Gegenwalze (106) eine gegenläufige Bewegung resultiert.

4. Dosiervorrichtung (100) nach Anspruch 1, **dadurch gekennzeichnet, dass** die Gegenwalze (106) feststehend ausgebildet ist.

5. Dosiervorrichtung (100) nach wenigstens einem der vorhergehenden Ansprüche, **gekennzeichnet durch** einen Schüttgutbehälter (110) an dessen unteren Ende eine Auslassöffnung (114) vorgesehen ist, in die die Dosierwalze (104) zum Aufnehmen von Schüttgut (102) zumindest abschnittsweise hineinragt.

6. Dosiervorrichtung (100) nach Anspruch 5, **dadurch gekennzeichnet, dass** in axialer Richtung die Länge der Auslassöffnung (114) des Schüttgutbehälters (110) im Wesentlichen der Länge des Spaltbereichs (108) und/oder im Wesentlichen der Länge der Dosierwalze (104) entspricht.

7. Dosiervorrichtung (100) nach wenigstens einem der vorhergehenden Ansprüche 5 bis 6, **dadurch gekennzeichnet, dass** sich der Schüttgutbehälter (110) zum unteren Ende hin aufweitet.

8. Dosiervorrichtung (100) nach wenigstens einem der vorhergehenden Ansprüche, **dadurch gekennzeichnet, dass** die Dosierwalze (104) eine Vielzahl von Längsnuten (116) zum Aufnehmen des Schüttguts (102) aufweist, wobei jeweils zwischen zwei Längsnuten (116) ein Längssteg (118) ausgebildet ist.

9. Dosiervorrichtung (100) nach Anspruch 8, **dadurch gekennzeichnet, dass** in Umfangsrichtung die Breite der Längsnuten (116) größer ist als die Breite der Längsstege (118).

10. Dosiervorrichtung (100) nach wenigstens einem der vorhergehenden Ansprüche 8 bis 9, **dadurch gekennzeichnet, dass** die Längsstege (118) in axialer Richtung durchgehend oder mehrmals unterbrochen ausgebildet sind.

11. Dosiervorrichtung (100) nach wenigstens einem der vorhergehenden Ansprüche 8 bis 10, **dadurch gekennzeichnet, dass** die Längsstege (118) jeweils mehrere in axialer Richtung voneinander beabstandete Stegabschnitte (120) aufweisen.

12. Dosiervorrichtung (100) nach Anspruch 11, **dadurch gekennzeichnet, dass** die Stegabschnitte (120) zweier in Umfangsrichtung benachbarter Längsstege (118) in Umfangsrichtung versetzt zueinander oder fluchtend hintereinander angeordnet sind.

13. Dosiervorrichtung (100) nach wenigstens einem der vorhergehenden Ansprüche 11 bis 12, **dadurch gekennzeichnet, dass** die Stegabschnitte (120) in axialer Richtung senkrechte oder keilförmige Flanken aufweisen.

14. Dosiervorrichtung (100) nach wenigstens einem der vorhergehenden Ansprüche, **dadurch gekennzeichnet, dass** die Gegenwalze (106) ausgebildet ist, durch die Dosierwalze (104) überschüssig aufgenommenes Schüttgut (102) im Spaltbereich (108) abzustreifen, insbesondere so, dass es dem Schüttgutbehälter (110) wieder zugeführt wird.

15. Dosiervorrichtung (100) nach wenigstens einem der vorhergehenden Ansprüche, **dadurch gekennzeichnet, dass** die Dosiervorrichtung (100) zumindest eine Abstreifeinrichtung (122) aufweist, die dazu ausgebildet ist, an der Dosierwalze (104) oder an der Gegenwalze (106) haftendes Schüttgut (102) abzustreifen.

16. Anlage (200) zum Verarbeiten eines Schüttguts (102), insbesondere eines trockenen Elektrodenmaterials (102), mit einer Dosiervorrichtung (100) nach wenigstens einem der vorhergehenden Ansprüche und einer der Dosiervorrichtung (100) nachgeschaltenen Kalander- und/oder Beschichtungsvorrichtung (202), wobei die Dosiervorrichtung (100) ausgebildet ist, Schüttgut (102) der Kalander- und/oder Beschichtungsvorrichtung (202) dosiert und, insbesondere in axialer Richtung, gleichmäßig verteilt zuzuführen.
